# EUROPÄISCHE PATENTSCHRIFT

(11) **EP 3 178 175 B1**
(45) Veröffentlichungstag und Bekanntmachung des Hinweises auf die Patenterteilung: **06.10.2021**
(21) Anmeldenummer: 15750974.6
(22) Anmeldetag: 05.08.2015
(51) Int. Cl.: H04B 10/80, G02B 6/38, G02B 6/44

(54) **VORRICHTUNG ZUR ÜBERTRAGUNG VON DATEN**
DEVICE FOR TRANSMITTING DATA
DISPOSITIF DE TRANSMISSION DE DONNÉES

(30) Priorität: 06.08.2014 DE 102014111198; 06.08.2014 DE 202014103659 U
(43) Veröffentlichungstag der Anmeldung: 14.06.2017
(73) Patentinhaber: trans data elektronik Gmbh, 49626 Bippen (DE)
(72) Erfinder: ENGEL, Andreas, 44135 Dortmund (DE)
(74) Vertreter: Fitzner, Uwe
(86) Internationale Anmeldenummer: PCT/EP2015/068086
(87) Internationale Veröffentlichungsnummer: WO 2016/020451

(56) Entgegenhaltungen:
- DE-A1- 10 007 172
- DE-A1-102012 020 589
- US-A- 5 394 503
- US-A1- 2009 166 404
- US-A1- 2010 322 562
- US-A1- 2011 176 779
- US-A1- 2013 322 838
- US-A1- 2014 140 660

## Beschreibung

Die vorliegende Erfindung betrifft eine Vorrichtung zur Übertragung von Daten.

Für die Datenübertragung mit höheren Datenübertragungsdaten über längere Strecken verwendet heute man vorzugsweise Glasfasern. Diese weisen in der Regel ab Werk vorkonfektionierte Stecker auf oder es werden einseitig mit Steckverbindungen konfektionierte Fasern (Pigtails) vor Ort mittels Fusionsspleiß verbunden. Die Glasfaserstrecken besitzen heute mindestens 2 bis 192 Glasfasern.

Die vorkonfektionierte Lösung wird meistens bei der Vertikalverkabelung von Gebäuden oder auch für die Rackverkabelung im Rechenzentrum eingesetzt. Alternativ sind auch Anlagenverkabelungen in der Industrie gebräuchlich.

Die Spleißlösung setzt man regelmäßig ein, wenn im Feld keine exakte Längenermittlung möglich ist, die Strecken sehr lang sind und die Kabelwege für vorkonfektionierte Kabel zu eng sind. Dies ist z. B. bei Verbindungen von Gebäude zu Gebäude (sog. Kampus-Verkabelungen) der Fall. Die Spleißlösung hat den Nachteil, dass sie aufwändiger in der Installation vor Ort ist und mehr Platz im Verteilerfeld beansprucht, da die Glasfaserspleiße zum Schutz in speziellen Spleißkassetten untergebracht sein müssen.

In der Praxis werden beispielsweise die Patchkabel und die Strecken standardmäßig gekreuzt. Drei gekreuzte Kabel zusammengesteckt ergeben einen gekreuzten Link. Dabei geht der Sendekanal auf den Empfangskanal und umgekehrt. Wenn aber die Strecke 1:1 gerade belegt ist, muss ein gekreuztes und ein gerades Patchkabel eingesetzt werden. Dies kann zu Komplikationen führen, wenn mehrere Strecken z. B. in Rechenzentren miteinander verbunden werden müssen (sogenanntes Durchpatchen).

In Rechenzentren geht man mittlerweile dazu über, modular vorkonfektionierte

Systeme einzusetzen Es handelt sich um Module, die frontseitig herkömmliche Duplexsteckverbinder besitzen und rückseitig sogenannte Arraysteckerverbinder, z. B. MPO/MTP-Steckverbinder aufweisen.

Wenn bei MPO Steckverbindern die Fasern gerade miteinander verbunden werden, handelt es sich um die sogenannte Typ A-Belegung (Faser 1 auf 1, ...... Faser 12 auf Faser 12). Die Methode A hat demgemäß folgendes Aussehen:
Duplex-Patchkabel 1:1 → Modul 1:1 → MPO-Verbinder Typ A → MPO Kabel Typ A → MPO-Verbinder A → Modul 1:1 → Duplex-Patchkabel gekreuzt. Dieses System hat den Nachteil, dass für die Duplex- und für die Parallelübertragung unterschiedlich belegte Patchkabel verwendet werden.

Für die Parallelübertragung ist Voraussetzung, dass der Sender (TX) auf den Empfänger (RX) trifft. Man erreicht dies, indem der sogenannte Belegungstyp B verwendet wird. D. h. auf einer Kabelseite werden die Fasern im Stecker um 180° Grad gedreht belegt (Faser geht auf Faser 12, Faser 2 geht auf Faser 11,.....Faser 12 auf Faser 1). Für die Parallelübertragung ist die Typ B-Belegung optimal. Denn hier kann mühelos mit einer einheitlichen Belegung gearbeitet werden. Es ist nur darauf zu achten, dass im Link alle Elemente, Kabel und Verbinder vom Typ B sind. Die Kupplungselemente gibt es in Typ B (key up/key up) und Typ A (key up/key down). Diese Kupplungselemente halten nur die beiden zusammengesteckten MPO-Stecker zusammen und besitzen keine Glasfasern. Durch die Codiernase (key) der MPO-Stecker wird eine verdrehsichere Steckverbindung erzielt.

Die Methode B hat demgemäß folgendes Aussehen: Duplex-Patchkabel gekreuzt → Modul 1:1 → MPO-Verbinder Typ B → MPO-Kabel Typ B → MPO-Verbinder Typ B → Modul gekreuzt → Duplex-Patchkabel gekreuzt.

Dieses System weist den Vorteil auf, dass für die Duplex- und Parallelübertragung einheitlich belegte Patchkabel verwendet werden. Nachteilig ist allerdings, dass unterschiedlich belegte Module benötigt werden

Wenn die Fasern paarweise gedreht werden, handelt es sich um die sogenannte Typ

C-Belegung (Faser 1 auf Faser 2, Faser 2 auf Faser 1, Faser 3 auf Faser 4, ... Faser 12 auf Faser 11). Die Methode C hat folgendes Aussehen:
Duplex-Patchkabel gekreuzt → 1:1 → MPO-Verbinder Typ A → MPO-Kabel Typ C → MPO-Verbinder A → Modul 1:1 → Duplex-Patchkabel gekreuzt.

Dieses System weist den Vorteil auf, dass für Duplexübertragungen einheitlich belegte Patchkabel und Module verwendet werden können. Der Nachteil ist, dass für die Parallelübertragung unterschiedlich belegte Patchkabel zum Einsatz kommen.

Im Ergebnis heißt dies, dass alle drei Methoden den Nachteil besitzen, dass man für die Duplex- und Parallelübertragung unterschiedliche Patchkabel oder Module einsetzen muss.

Connectorlösungen für Glasfaserleitungen in verschiedenen Ausführungen sind aus der WO 2006/07/254 A1, WO 2013/052748 A2, WO 2014/078261 A1, EP 2259118 A1, US 2010/0092171 A1, US 2010/322562 A1 bekannt. Als weiterer Stand der Technik können genannt werden: US 2009/166404 A1; US 2014/140660 A1; DE 10 2012 020589 A1; US 2013/322838 A1; DE 100 07 172 A1; US 5,394,503 und US 2011/176779 A1.

Nach der US 6,869, 22 B1 ist es möglich, mit einheitlich belegten Modulen in Verbindung mit einem Typ B MPO-Trunkkabel zu arbeiten. Mit dieser Methode ist eine reibungslose Migration von der Duplex- zur Parallelübertragung möglich und es werden immer nur einheitliche Patchkabel an beiden Enden benötigt.

Die vorliegende Erfindung hat sich demgemäß die Aufgabe gestellt, ausgehend vom Stand der Technik die Handhabung noch einfacher und sicherer zu gestalten. Einfacher bedeutet, dass einheitlich belegte Linkkomponenten genutzt werden können und im Gegensatz zu den drei offiziell genormten Methoden eine einfache Migration zu höheren Übertragungsraten möglich wird. Dies bedeutet auch Investitionssicherheit. Außerdem wird die Planung der Netze einfacher.

Diese Aufgabe wird durch eine Vorrichtung zur Übertragung von Daten gemäß Anspruch 1 gelöst.

Unter Steckverbindern sind die Verbindungen von zwei oder mehreren Steckern über Kupplungselemente zu verstehen. Steckverbinder sind spezielle Vorrichtungen zur lösbaren Verbindung von Lichtwellenleitern bzw. Glasfaserkabeln. Lichtwellenleiter können über diese miteinander oder mit anderen Komponenten verbunden werden. In der Nachrichtentechnik sind dies Geräte wie Sender, Empfänger oder Verstärker, und in der Messtechnik, Spektroskopie oder Medizintechnik sind dies beispielsweise Laser-Geräte, Licht-Sensoren oder Strahlungsdetektoren.

Die Mehrheit der heute eingesetzten Steckverbindungen sind Stecker-Kupplungsstecker-Verbindungen. Die verwendeten Stecker müssen dabei eine möglichst geringe Signaldämpfung und eine hohe Rückflussdämpfung, sowie eine hohe Reproduzierbarkeit bzw. Aufrechterhaltung dieser Parameter über mehrere hundert Verbindungszyklen besitzen.

Erfindungsgemäß werden als Leiter Glasfasern vorzugsweise eingesetzt. Das erfindungsgemäße System mit wenigstens zwei Modulen, zwischen denen sich die Glasfaserstrecke befindet, stellt einen sogenannten Link dar. Für einen solchen Link werden in der Regel eine Vielzahl Glasfaserpaare benötigt. Eine Glasfaser dient der Sendung und die andere dem Empfang von Daten (sog. Sender (TX) und Empfänger (RX)). Dies bedingt, dass in dem Link eine Kreuzung der Glasfasern vorgenommen wird, damit jeder der Sender (TX) mit dem Empfänger (RX) verbunden wird. Die erfindungsgemäße Lösung bezieht sich hierbei auf die Übertragung mit Multimode- und Singlemode-Fasern.

Der erfindungsgemäße Link weist vorzugsweise eine fest installierte Verkabelung auf, die auf beiden Seiten ein Modul besitzt. Zwischen den Modulen befindet sich die Glasfaserstrecke, die auf beiden Seiten Stecker besitzt, die von dem am anderen Modul angeordneten Steckverbindungen aufgenommen werden können. Auf der hiervon getrennten Seite der Module befinden sich die Kupplungselemente. Diese dienen der Verbindung mittels Patchkabel.

Die Erfindung verwendet MPO-Steckverbinder. Diese weisen vorzugsweise 12 und 24 Glasfasern auf. Dies hat den Vorteil, dass auf sehr engem Raum sehr hohe Faserzahlen angeordnet werden können. In der Folge kann mit einem Steckvorgang eine große Anzahl von Fasern verbunden werden. Dies hat eine erhebliche Zeitersparnis und auch ein Sicherheitselement zur Folge. Solche MPO-Steckverbinder eignen sich für höhere Übertragungsraten, z. B. 40 bis 100 Gigabit Ethernet (GbE). Für die 40 GbE über Multimode wird eine Kabelbindung von 4 Glasfaserpaaren vorgenommen. Für die 100 GbE wird eine Bündelung von 10 Glasfaserpaaren vorgenommen. Daraus ergibt sich der Vorteil des erfindungsgemäßen Systems mit rückseitigen Steckverbindern, dass die Glasfaserstrecken bereits eine einfache Migrationsoption zu höheren Datenübertragungsraten bieten.

Für die Erfindung ist es wesentlich, dass die MPO-Steckverbinder in beiden Modulen derart angeordnet und ausgestaltet sind, dass sie identisch sind. D. h. die Module besitzen erfindungsgemäß frontseitig 24 x Einzelfaser-Steckverbinder (vorzugsweise aber nicht zwingend vom Typ LC) und rückseitig 2 x MPO-Steckverbinder.

Erfindungsgemäß befinden sich mithin die MPO-Steckverbinder auf einer Seite des Moduls, während die zusammengehörigen Ports für die Single-Fiber-Steckverbinder (z.B. LC Duplex) auf einer anderen Seite des Moduls angeordnet sind.

Das Modul weist demzufolge Seitenwände auf. Hier sind vorzugsweise an den gegenüberliegenden Seiten die MPO-Steckverbinder und die Duplex-Steckverbinder Ports angeordnet. In einer besonders vorteilhaften Weise ist das Modul so ausgestaltet, dass es einen geschlossenen Kasten darstellt, welcher vorzugsweise rechteckig ausgestaltet ist. In diesem Kasten sind die Leitungsverbindungen zwischen MPO-Steckverbinder und Duplex-Steckverbinder fest verkabelt. Es handelt sich um Steckverbinder, die mittels Kupplungen gekoppelt werden. Eine solche Steckverbindung besteht also aus 2 Steckern und einer Kupplung.

Im Effekt hat man somit auf einer Seite den MPO-Steckverbinder und auf der anderen Seite des Verteilerfeldes die LC Duplexsteckverbinder. Der Vorteil ist, dass mithin LC Duplex und MPO-Steckverbinder auf getrennten Seiten sind. Im Effekt ist damit eine vereinfachte Handhabung möglich.

Erfindungsgemäß ist in einer Variante bei Einsatz von 12-Faser-MPO-Steckern für das Trunkkabel eine Typ-B-Belegung und in einer zweiten Variante bei Einsatz von 24-Faser-MPO-Steckern für das Trunkkabel eine Typ-A-Belegung vorgesehen.

Im Folgenden wird der Gegenstand der Erfindung unter Bezugnahme auf die Figuren näher erläutert. In diesen werden mit den Ziffern 1 bis 24 die jeweiligen MPO-Steckverbindungen bezeichnet. TX und RX (X = 1 bis 12) bezeichnen die jeweiligen Ports.

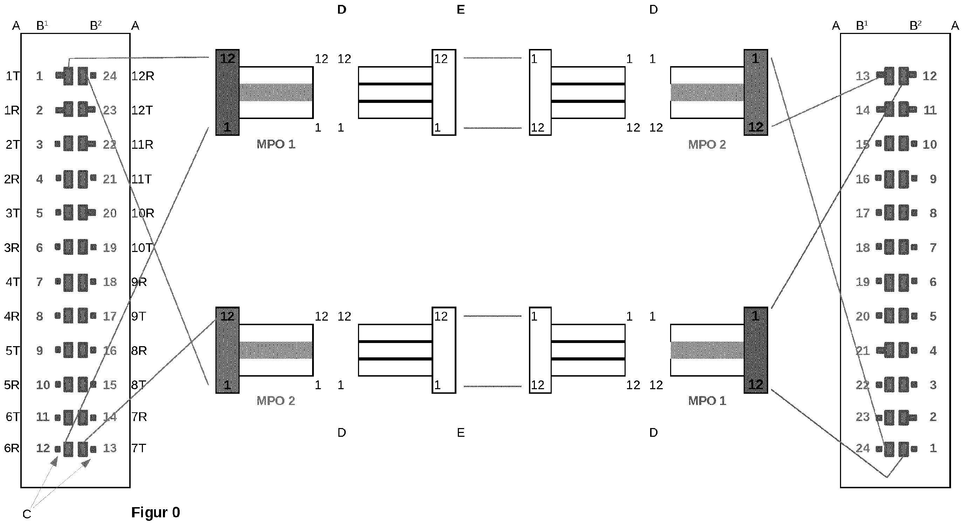

In der illustrativen Figur 0 sind die Rastnasen entgegensetzt angeordnet. Rückseitig befinden sich 2 x MPO. Alle Fasern der Reihe 1 frontseitig gehen auf MPO1 und alle Fasern von Reihe 2 gehen auf MPO2. Die beiden MPOs sind identisch belegt. Die Kreuzung wird durch einseitiges Umstecken des MPOs und durch das Drehen des Moduls erreicht.
Nachteil: Die zusammengehörigen LC Duplex Ports befinden sich zwar in einer Reihe aber die Ports sind spiegelverkehrt angeordnet.
Die Belegungspositionen sind in der folgenden Tabelle wiedergegeben.

### Belegungstabelle zu Figur 0

**Belegungstabelle**

| **Port** | **Modul Position** | **MPO 1 Positiion** | **MPO 2 Position** |
|---|---|---|---|
| 1T | 1 | 12 | |
| 1R | 2 | 11 | |
| 2T | 3 | 10 | |
| 2R | 4 | 9 | |
| 3T | 5 | 8 | |
| 3R | 6 | 7 | |
| 4T | 7 | 6 | |
| 4R | 8 | 5 | |
| 5T | 9 | 4 | |
| 5R | 10 | 3 | |
| 6T | 11 | 2 | |
| 6R | 12 | 1 | |
| 7T | 13 | | 12 |
| 7R | 14 | | 11 |
| 8T | 15 | | 10 |
| 8R | 16 | | 9 |
| 9T | 17 | | 8 |
| 9R | 18 | | 7 |
| 10T | 19 | | 6 |
| 10R | 20 | | 5 |
| 11T | 21 | | 4 |
| 11R | 22 | | 3 |
| 12T | 23 | | 2 |
| 12R | 24 | | 1 |

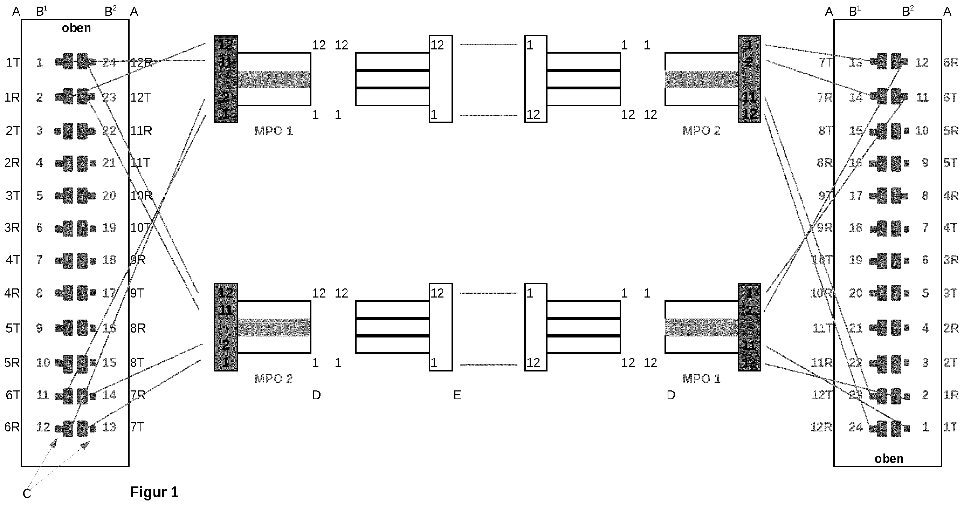

In der Figur 1 sind die Rastnasen entgegensetzt angeordnet. Rückseitig befinden sich 2 x MPO. Alle Fasern der Reihe 1 frontseitig gehen auf MPO1 und alle Fasern von Reihe 2 gehen auf MPO2. Das Modul ist mit zwei unterschiedlichen Belegungen ausgestattet. MPO1 ist mit paarweise gedrehten Fasern versehen und der MPO2 ist 1:1 belegt. Die Kreuzung wird durch einseitiges Umstecken des MPOs und durch das Drehen des Moduls erreicht. Vorteil: Die zusammengehörigen LC Duplex Ports befinden sich in einer Reihe sind nicht spiegelverkehrt angeordnet.
Die Belegungspositionen sind in den folgenden Tabellen wiedergegeben.

### Belegungstabelle zu Figur 1

**Belegungstabelle**

| **Port** | **Modul Position** | **MPO 1 Positiion** | **MPO 2 Position** |
|---|---|---|---|
| 1T | 1 | 11 | |
| 1R | 2 | 12 | |
| 2T | 3 | 9 | |
| 2R | 4 | 10 | |
| 3T | 5 | 7 | |
| 3R | 6 | 8 | |
| 4T | 7 | 5 | |
| 4R | 8 | 6 | |
| 5T | 9 | 3 | |
| 5R | 10 | 4 | |
| 6T | 11 | 1 | |
| 6R | 12 | 2 | |
| 7T | 13 | | 1 |
| 7R | 14 | | 2 |
| 8T | 15 | | 3 |
| 8R | 16 | | 4 |
| 9T | 17 | | 5 |
| 9R | 18 | | 6 |
| 10T | 19 | | 7 |
| 10R | 20 | | 8 |
| 11T | 21 | | 9 |
| 11R | 22 | | 10 |
| 12T | 23 | | 11 |
| 12R | 24 | | 12 |

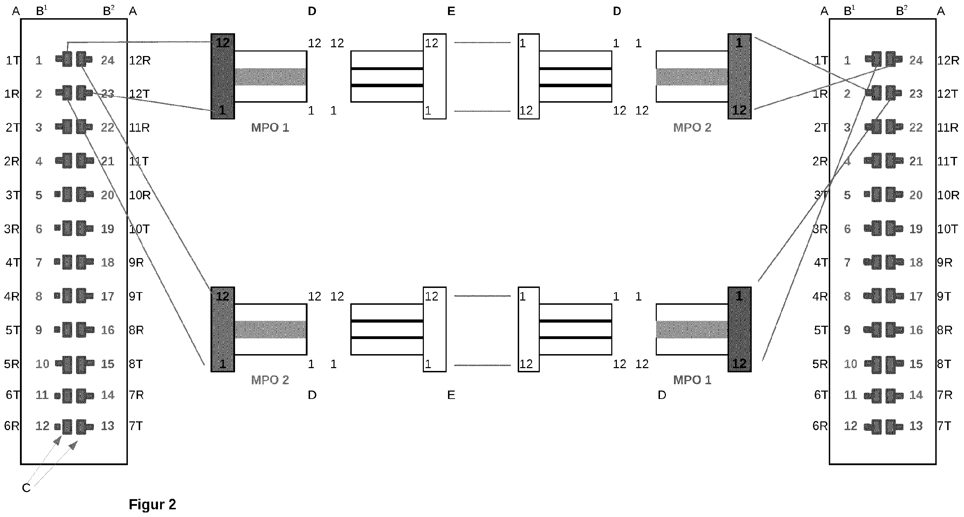

In der Figur 2 sind die Rastnasen entgegensetzt angeordnet. Rückseitig befinden sich 2 x MPO. Die Sender (TX) beider Reihen frontseitig gehen auf MPO 1 und die Empfänger (RX) beider Reihen gehen auf MPO 2. Die Kreuzung wird durch einseitiges Umstecken der beiden MPOs erreicht. Der Vorteil dieses Systems liegt darin, dass sich die LC Duplex-Ports auf beiden Link-Seiten in zwei Reihen befinden und nicht spiegelverkehrt angeordnet sind. Es muss kein Modul gedreht werden. Die Belegungspositionen sind in den folgenden Tabellen wiedergegeben.

### Belegungstabelle zu Figur 2

**Belegungstabelle**

| **Port** | **Modul Position** | **MPO 1 Positiion** | **MPO 2 Position** |
|---|---|---|---|
| 1T | 1 | 12 | |
| 1R | 2 | | 1 |
| 2T | 3 | 11 | |
| 2R | 4 | | 2 |
| 3T | 5 | 10 | |
| 3R | 6 | | 3 |
| 4T | 7 | 9 | |
| 4R | 8 | | 4 |
| 5T | 9 | 8 | |
| 5R | 10 | | 5 |
| 6T | 11 | 7 | |
| 6R | 12 | | 6 |
| 7T | 13 | 6 | |
| 7R | 14 | | 7 |
| 8T | 15 | 5 | |
| 8R | 16 | | 8 |
| 9T | 17 | 4 | |
| 9R | 18 | | 9 |
| 10T | 19 | 3 | |
| 10R | 20 | | 10 |
| 11T | 21 | 2 | |
| 11R | 22 | | 11 |
| 12T | 23 | 1 | |
| 12R | 24 | | 12 |

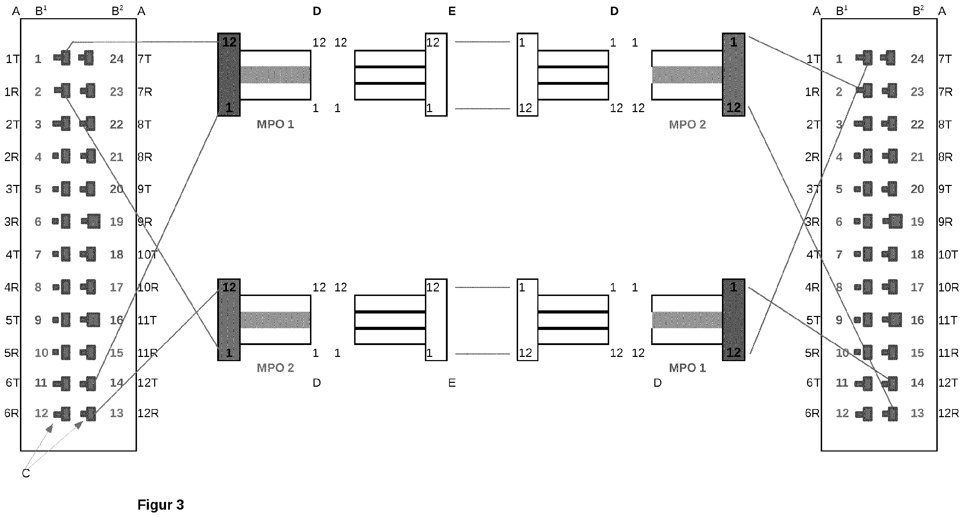

In Figur 3 sind frontseitig mit 2 x Reihen 6 x 2 LC-Duplex vorhanden. Die Rastnasen sind in einer Richtung angeordnet. Rückseitig befinden sich 2 x MPO-Steckverbinder. Die Sender (TX) beider Reihen gehen auf MPO 1 und die Empfänger (RX) beider Reihen gehen auf MPO 2. Die Kreuzung wird durch einseitiges Umstecken der beiden MPOs erreicht. Der Vorteil diese Anlage ist, dass die zugehörigen LC-Duplex-Ports sich in einer Reihe befinden und nicht spiegelverkehrt angeordnet sind. Es muss kein Modul gedreht werden. Die Belegungsposition ergeben sich aus folgender Tabelle:

### Belegungstabelle zu Figur 3

**Belegungstabelle**

| **Port** | **Modul Position** | **MPO 1 Positiion** | **MPO 2 Position** |
|---|---|---|---|
| 1T | 1 | 12 | |
| 1R | 2 | | 1 |
| 2T | 3 | 11 | |
| 2R | 4 | | 2 |
| 3T | 5 | 10 | |
| 3R | 6 | | 3 |
| 4T | 7 | 9 | |
| 4R | 8 | | 4 |
| 5T | 9 | 8 | |
| 5R | 10 | | 5 |
| 6T | 11 | 7 | |
| 6R | 12 | | 6 |
| 7T | 13 | | 12 |
| 7R | 14 | 1 | |
| 8T | 15 | | 11 |
| 8R | 16 | 2 | |
| 9T | 17 | | 10 |
| 9R | 18 | 3 | |
| 10T | 19 | | 9 |
| 10R | 20 | 4 | |
| 11T | 21 | | 8 |
| 11R | 22 | 5 | |
| 12T | 23 | | 7 |
| 12R | 24 | 6 | |

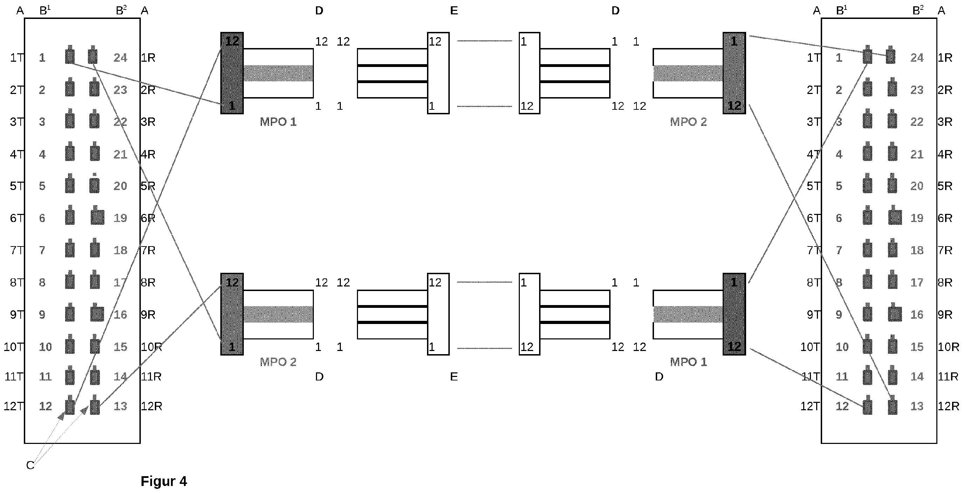

In der illustrativen Figur 4 ist die Anordnung ähnlich. Nur die Rastnasen zur Steckerkodierung sind hier zwar in einer Richtung, aber nicht seitlich sondern nach oben ausgerichtet. Die Belegungsposition ergeben sich aus folgender Tabelle: Belegungstabelle zu Figur 4

**Belegungstabelle**

| **Port** | **Modul Position** | **MPO 1 Positiion** | **MPO 2 Position** |
|---|---|---|---|
| 1T | 1 | 1 | |
| 1R | 2 | 2 | |
| 2T | 3 | 3 | |
| 2R | 4 | 4 | |
| 3T | 5 | 5 | |
| 3R | 6 | 6 | |
| 4T | 7 | 7 | |
| 4R | 8 | 8 | |
| 5T | 9 | 9 | |
| 5R | 10 | 10 | |
| 6T | 11 | 11 | |
| 6R | 12 | 12 | |
| 7T | 13 | | 12 |
| 7R | 14 | | 11 |
| 8T | 15 | | 10 |
| 8R | 16 | | 9 |
| 9T | 17 | | 8 |
| 9R | 18 | | 7 |
| 10T | 19 | | 6 |
| 10R | 20 | | 5 |
| 11T | 21 | | 4 |
| 11R | 22 | | 3 |
| 12T | 23 | | 2 |
| 12R | 24 | | 1 |

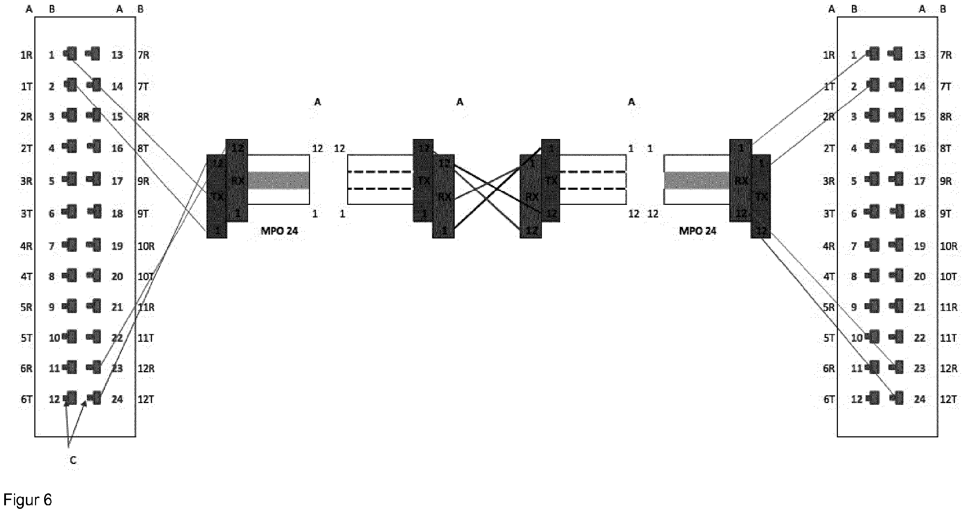

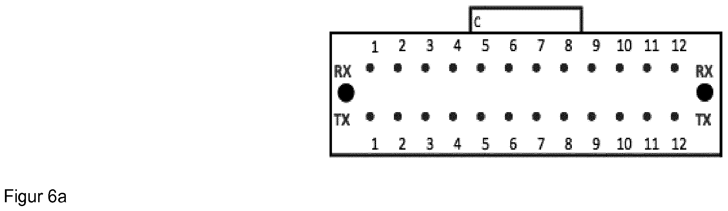

Die oben aufgeführten Varianten sind auch mit dem MPO 24 Fasern möglich. Dieser Stecker besitzt zwei Reihen mit jeweils 12 Fasern. Zur Verdeutlichung ist in Figur 6 eine Belegung schematisch mit dem MPO 24 dargestellt. Die Cross Reference Tabelle für den MPO24 macht den Sachverhalt deutlich.

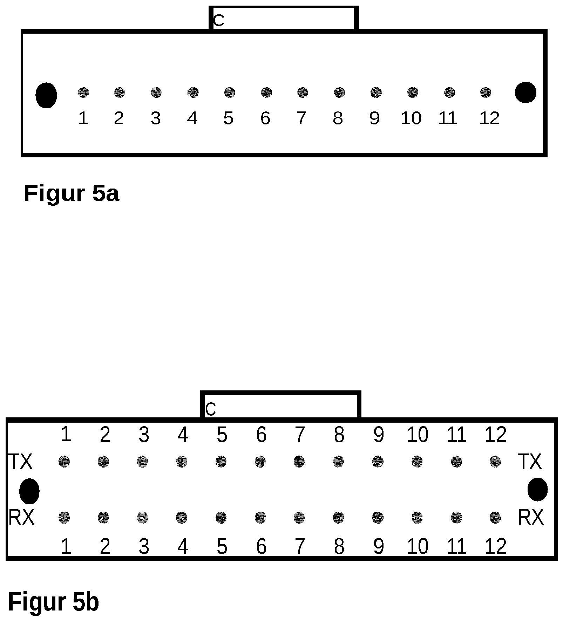

Figur 5 zeigt die Faserpositionsziffern der MPO-Stecker in der Aufsicht von vorne. Figur 5a zeigt hierbei eine Ansicht für MP 12-Fasern. Dagegen ist in Figur 5b die Ansicht für MPO 24 Fasern dargestellt.

Die Crossreferenz für MP 12-MP24-Fasern ergibt sich aus der folgenden Tabelle.

**Crossreferenz MPO 12 - MPO 24**

| **MPO 24** | **MPO 1 Positiion** | **MPO 2 Position** |
|---|---|---|
| TX 1 | 1 | |
| TX 2 | 2 | |
| TX 3 | 3 | |
| TX 4 | 4 | |
| TX 5 | 5 | |
| TX 6 | 6 | |
| TX 7 | 7 | |
| TX 8 | 8 | |
| TX 9 | 9 | |
| TX 10 | 10 | |
| TX 11 | 11 | |
| TX 12 | 12 | |
| RX 1 | | 1 |
| RX 2 | | 2 |
| RX 3 | | 3 |
| RX 4 | | 4 |
| RX 5 | | 5 |
| RX 6 | | 6 |
| RX 7 | | 7 |
| RX 8 | | 8 |
| RX 9 | | 9 |
| RX 10 | | 10 |
| R X 11 | | 11 |
| RX 12 | | 12 |

Figur 6 zeigt eine Belegung mit dem 24 Faser-MPO-Steckverbinder.
Vorteil: Es müssen keine MPO Stecker rückseitig umgesteckt werden und es entfällt die Drehung des Moduls. Der 24 FASER MPO bietet mit dieser Belegung die umfangreichsten Migrationsoptionen. Unabhängig von der Anzahl der Fasern hat man generell ein stark vereinfachtes Handling. Es können generell vor und nach der Migration einheitlich belegte Kabel und Komponenten verwendet werden.

Die Belegung der Trunkkabel ist der folgenden Tabelle zu entnehmen.

### Belegung Trunkkabel zu Figur 6

**Trunkkabel**

| Seite 1 | | Seite 2 |
|---|---|---|
| RX 1 | - | TX 1 |
| RX 2 | - | TX 2 |
| RX 3 | - | TX3 |
| RX 4 | - | TX 4 |
| RX 5 | - | TX 5 |
| RX 6 | - | TX 6 |
| RX 7 | - | TX 7 |
| RX 8 | - | TX 8 |
| RX 9 | - | TX 9 |
| RX 10 | - | TX 10 |
| RX 11 | - | TX 11 |
| RX 12 | - | TX 12 |
| TX 1 | - | RX 1 |
| TX 2 | - | RX 2 |
| TX 3 | - | RX 3 |
| TX 4 | - | RX 4 |
| TX 5 | - | RX 5 |
| TX 6 | - | RX 6 |
| TX 7 | - | RX 7 |
| TX 8 | - | RX 8 |
| TX 9 | - | RX 9 |
| TX 19 | - | RX 10 |
| TX 11 | - | RX 11 |
| TX 12 | - | RX 12 |

Die Belegungspositionen für die Abbildung 6 ergeben sich aus der folgenden Tabelle:

### Belegungstabelle zu Figur 6

**Belegungstabelle**

| **Port** | **Modul Position** | **MPO 24** | |
|---|---|---|---|
| | | **RX** | **TX** |
| 1R | 1 | 1 | |
| 1T | 2 | | 1 |
| 2R | 3 | **2** | |
| 2T | 4 | | 2 |
| 3R | 5 | 3 | |
| 3T | 6 | | 3 |
| 4R | 7 | 4 | |
| 4T | 8 | | 4 |
| 5R | 9 | 5 | |
| 5T | 10 | | 5 |
| 6R | 11 | 6 | |
| 6T | 12 | | 6 |
| 7R | 13 | 7 | |
| 7T | 14 | | 7 |
| 8R | 15 | 8 | |
| 8T | 16 | | B |
| 9R | 17 | 9 | |
| 9T | 18 | | 9 |
| 10R | 19 | 10 | |
| 10T | 20 | | 10 |
| 11R | 21 | 11 | |
| 11T | 22 | | 11 |
| 12R | 23 | 12 | |
| 12T | 24 | | 12 |

In der Abbildung zu erkennen ist die Steckerkodierung für MPO 24. Wie bereits aus der Figur 5b ersichtlich, sind im Gegensatz zu MPO 12 hier zwei Reihen á 12 Positionen übereinander angeordnet.

### Bezugszeichenliste:

- A =: Ports
- B =: Position der MPO-Steckverbinder
- C =: Codierung/Rastnase
- D =: Adapter
- E =: Trunkkabel
- 1 - 24 =: Faser-Positionsziffern der MPO-Steckverbinder
- TX =: Senderport
- RX=: Empfängerport
- X =: 1 -12 (= Positionen der Ports)

## Patentansprüche

1. Vorrichtung zur Übertragung von Daten umfassend wenigstens zwei Module mit Steckverbinder-Kupplungen, die einerseits der Aufnahme von Patchkabeln dienen und andererseits zur Aufnahme von Trunkkabeln zur Verbindung der Module untereinander dienen, wobei die MPO-Steckverbinder der einzelnen Module eine identische Anordnung und Ausgestaltung aufweisen, wobei die MPO-Steckverbinder auf einer Seite des Moduls und die zusammengehörigen Ports für die Duplex-Steckverbinder auf einer anderen Seite des Moduls angeordnet sind,
das Modul so ausgestaltet ist, dass es einen geschlossenen Kasten darstellt, worin die Leitungsverbindungen zwischen MPO-Steckverbinder und Duplex-Steckverbinder fest verkabelt sind, **dadurch gekennzeichnet, dass** das Modul mit zwei unterschiedlichen Belegungen ausgestattet ist und die Belegung des Moduls ausgewählt ist aus einer der der drei Belegungstabellen 1, 2 oder 3:
Belegungstabelle 1
**Belegungstabelle**
| **Port** | **Modul Position** | **MPO 1 Positiion** | **MPO 2 Position** |
|---|---|---|---|
| 1T | 1 | 11 | |
| 1R | 2 | 12 | |
| 2T | 3 | 9 | |
| 2R | 4 | | |
| 3T | 5 | 7 | |
| 3R | 6 | | |
| 4T | 7 | 5 | |
| 4R | 8 | 6 | |
| 5T | 9 | 3 | |
| 5R | 10 | 4 | |
| 6T | 11 | 1 | |
| 6R | 12 | 2 | |
| 7T | 13 | | 1 |
| 7R | 14 | | 2 |
| 8T | 15 | | 3 |
| 8R | 16 | | 4 |
| 9T | 17 | | 5 |
| 9R | 18 | | 6 |
| 10T | 19 | | 7 |
| 10R | 20 | | 8 |
| 11T | 21 | | 9 |
| 11R | 22 | | 10 |
| 12T | 23 | | 11 |
| 12R | 24 | | 12 |
Belegungstabelle 2
**Belegungstabelle**
| **Port** | **Modul Position** | **MPO 1 Positiion** | **MPO 2 Position** |
|---|---|---|---|
| 1T | 1 | 12 | |
| 1R | 2 | | 1 |
| 2T | 3 | 11 | |
| 2R | 4 | | 2 |
| 3T | 5 | 10 | |
| 3R | 6 | | 3 |
| 4T | 7 | 9 | |
| 4 R | 8 | | 4 |
| 5T | 9 | 8 | |
| 5R | 10 | | 5 |
| 6T | 11 | 7 | |
| 6R | 12 | | 6 |
| 7T | 13 | 6 | |
| 7R | 14 | | 7 |
| 8T | 15 | 5 | |
| 8R | 16 | | 8 |
| 9T | 17 | 4 | |
| 9R | 18 | | 9 |
| 10T | 19 | 3 | |
| 10R | 20 | | 10 |
| 11T | 21 | 2 | |
| 11R | 22 | | 11 |
| 12T | 23 | 1 | |
| 12R | 24 | | 12 |
und
Belegungstabelle 3
**Belegungs tabelle**
| **Port** | **Modul Position** | **MPO 1 Positiion** | **MP O 2 Position** |
|---|---|---|---|
| 1T | 1 | 12 | |
| 1R | 2 | | 1 |
| 2T | 3 | 11 | |
| 2R | 4 | | 2 |
| 3T | 5 | 10 | |
| 3R | 6 | | 3 |
| 4T | 7 | 9 | |
| 4R | 8 | | 4 |
| 5T | 9 | 8 | |
| 5R | 10 | | 5 |
| 6T | 11 | 7 | |
| 6R | 12 | | 6 |
| 7T | 13 | | 12 |
| 7R | 14 | 1 | |
| 8T | 15 | | 11 |
| 8R | 16 | 2 | |
| 9T | 17 | | 10 |
| 9R | 18 | 3 | |
| 10T | 19 | | 9 |
| 10R | 20 | 4 | |
| 11T | 21 | | 8 |
| 11R | 22 | 5 | |
| 12T | 23 | | 7 |
| 12R | 24 | 6 | |

2. Vorrichtung gemäß Anspruch 1 **dadurch gekennzeichnet, dass** die Leiter der Trunkkabel Glasfasern sind.

3. Vorrichtung nach einem der vorhergehenden Ansprüche **dadurch gekennzeichnet, dass** das Trunkkabel bei Einsatz von 12-Faser-MPO-Steckern eine Typ-B-Belegung aufweist.

## Claims

1. Device for transmitting data comprising at least two modules having connector couplings which on the one hand serve to receive patch cables and on the other hand serve to receive trunk cables for connecting the modules to one another, the MPO connectors of the individual modules having an identical arrangement and configuration, wherein
the MPO connectors are arranged on one side of the module and the matching ports for the duplex connectors are arranged on another side of the module, the module is designed in such a way that it is a closed box, wherein the line connections between MPO connectors and Duplex connectors are hardwired, **characterized in that**
the module is equipped with two different allocations and the allocation of the module is chosen from one of the three allocation tables 1, 2, or 3:
**Allocation table 1**
| **Port** | **Modul Position** | **MPO 1 Positiion** | **MPO 2 Position** |
|---|---|---|---|
| 1T | 1 | 11 | |
| 1 R | 2 | 12 | |
| 2T | 3 | 9 | |
| 2R | 4 | 10 | |
| 3T | 5 | 7 | |
| 3R | 6 | 8 | |
| 4T | 7 | 5 | |
| 4R | 8 | 6 | |
| 5T | 9 | 3 | |
| 5R | 10 | 4 | |
| 6T | 11 | 1 | |
| 6R | 12 | 2 | |
| 7T | 13 | | 1 |
| 7R | 14 | | 2 |
| 8T | 15 | | 3 |
| 8R | 16 | | 4 |
| 9T | 17 | | 5 |
| 9R | 18 | | 6 |
| 10T | 19 | | 7 |
| 10R | 20 | | 8 |
| 11T | 21 | | 9 |
| 11R | 22 | | 10 |
| 12T | 23 | | 11 |
| 12R | 24 | | 12 |
**Allocation table 2**
| **Port** | **Modul Position** | **MP O 1 Positiion** | **MPO 2 Position** |
|---|---|---|---|
| 1T | 1 | 12 | |
| 1R | 2 | | 1 |
| 2T | 3 | 11 | |
| 2R | 4 | | **2** |
| 3T | 5 | 10 | |
| 3R | 6 | | 3 |
| 4T | 7 | 9 | |
| 4R | 8 | | 4 |
| 5T | 9 | 8 | |
| 5R | 10 | | 5 |
| 6T | 11 | 7 | |
| 6R | 12 | | 6 |
| 7T | 13 | 6 | |
| 7R | 14 | | 7 |
| 8T | 15 | 5 | |
| 8R | 16 | | 8 |
| 9T | 17 | 4 | |
| 9R | 18 | | 9 |
| 10T | 19 | 3 | |
| 10R | 20 | | 10 |
| 11T | 21 | 2 | |
| 11R | 22 | | 11 |
| 12T | 23 | 1 | |
| 12R | 24 | | 12 |
And
**Allocation table 3**
| **Port** | **Modul Position** | **MP O 1 Positiion** | **MP O 2 Position** |
|---|---|---|---|
| 1T | 1 | 12 | |
| 1R | 2 | | 1 |
| 2T | 3 | 11 | |
| 2R | 4 | | 2 |
| 3T | 5 | 10 | |
| 3R | 6 | | 3 |
| 4T | 7 | 9 | |
| 4R | 8 | | 4 |
| 5T | 9 | 8 | |
| 5R | 10 | | 5 |
| 6T | 11 | 7 | |
| 6R | 12 | | 6 |
| 7T | 13 | | 12 |
| 7R | 14 | 1 | |
| 8T | 15 | | 11 |
| 8R | 16 | 2 | |
| 9T | 17 | | 10 |
| 9R | 18 | 3 | |
| 10T | 19 | | 9 |
| 10R | 20 | 4 | I |
| 11T | 21 | | 8 |
| 11R | 22 | 5 | |
| 12T | 23 | | 7 |
| 12R | 24 | 6 | |

2. Device according to claim 1, **characterized in that** the lines of the trunk cables are glass fibers.

3. Device according to any of the preceding claims, **characterized in that** the trunk cable when using 12-fiber-MPO-plugs has a type-B allocation.

## Revendications

1. Dispositif pour transmettre des données, comprenant au moins deux modules avec des couplages de connecteurs qui servent d'une part à recevoir des câbles patch et d'autre part à recevoir des câbles de coffre pour relier entre eux les modules, les connecteurs MPO des modules individuels présentant un arrangement et une forme identique, dans lequel
les connecteurs MPO sont disposés sur un côté du module et les ports correspondants pour les connecteurs duplex sont disposés sur l'autre côté du module;
le module étant conçu de manière à constituer une boîte fermée, dans laquelle les connexions de lignes entre les connecteurs MPO et les connecteurs duplex sont solidement câblés, **caractérisées en ce que**
le module est équipé de deux allocations différentes et l'allocation du module est choisie d'un des trois tableaux d'allocation 1, 2 ou 3:
**Tableau d'allocation 1**
| **Port** | **Modul Position** | **MPO 1 Positiion** | **MPO 2 Position** |
|---|---|---|---|
| 1T | 1 | 11 | |
| 1R | 2 | 12 | |
| 2T | 3 | 9 | |
| 2R | 4 | 10 | |
| 3T | 5 | 7 | |
| 3R | 6 | 8 | |
| 4T | 7 | 5 | |
| 4R | 8 | 6 | |
| 5T | 9 | 3 | |
| 5R | 10 | 4 | |
| 6T | 11 | 1 | |
| 6R | 12 | 2 | |
| 7T | 13 | | 1 |
| 7R | 14 | | 2 |
| 8T | 15 | | 3 |
| 8R | 16 | | 4 |
| 9T | 17 | | 5 |
| 9R | 18 | | 6 |
| 10T | 19 | | 7 |
| 10R | 20 | | 8 |
| IÏT | 21 | 1 | 9 |
| 11R | 22 | | 10 |
| 12T | 23 | | 11 |
| 12R | 24 | | 12 |
**Tableau d'allocation 2**
| **Port** | **Modul Position** | **MPO 1 Positiion** | **MPO 2 Position** |
|---|---|---|---|
| 1T | 1 | 12 | |
| 1R | 2 | | 1 |
| 2T | 3 | 11 | |
| 2R | 4 | | **2** |
| 3T | 5 | 10 | |
| 3R | 6 | | 3 |
| 4T | 7 | 9 | |
| 4R | 8 | | 4 |
| 5T | 9 | 8 | |
| 5R | 10 | | 5 |
| 6T | 11 | 7 | |
| 6R | 12 | | 6 |
| 7T | 13 | 6 | |
| 7R | 14 | | 7 |
| 8T | 15 | 5 | |
| 8R | 16 | | 8 |
| 9T | 17 | 4 | |
| 9R | 18 | | 9 |
| 10T | 19 | 3 | |
| 10R | 20 | | 10 |
| 11T | 21 | 2 | |
| 11R | 22 | | 11 |
| 12T | 23 | 1 | |
| 12R | 24 | | 12 |
et
**Tableau d'allocation 3**
| **Port** | **Modul Position** | **MPO 1 Positiion** | **MPO 2 Position** |
|---|---|---|---|
| 1T | 1 | 12 | |
| 1R | 2 | | 1 |
| 2T | 3 | 11 | |
| 2R | 4 | | 2 |
| 3T | 5 | 10 | |
| 3R | 6 | | 3 |
| 4T | 7 | 9 | |
| 4R | 8 | | 4 |
| 5T | 9 | 8 | |
| 5R | 10 | | 5 |
| 6T | 11 | 7 | |
| 6R | 12 | | 6 |
| 7T | 13 | | 12 |
| 7R | 14 | 1 | |
| 8T | 15 | | 11 |
| 8R | 16 | 2 | |
| 9T | 17 | | 10 |
| 9R | 18 | 3 | |
| 10T | 19 | | 9 |
| 10R | 20 | 4 | |
| 11T | 21 | | 8 |
| 11R | 22 | 5 | |
| 12T | 23 | | 7 |
| 12R | 24 | 6 | |

2. Dispositif selon la revendication 1, **caractérisé en ce que** les lignes des câbles de coffre sont des fibres de verre.

3. Dispositif selon l'une des revendications précédentes, **caractérisé en ce que** le câble de coffre pendant l'utilisation des fiches MPO à 12 fibres à une allocation de type B.
